# EUROPEAN PATENT APPLICATION

(11) **EP 4 460 128 A1**
(43) Date of publication of application: **06.11.2024**
(21) Application number: 22915200.4
(22) Date of filing: 30.12.2022
(51) Int. Cl.: H04W 72/04, H04W 72/12

(54) **PDCCH MONITORING METHOD AND APPARATUS, TERMINAL, AND STORAGE MEDIUM**

(30) Priority: 31.12.2021 CN 202111665999
(71) Applicant: VIVO MOBILE COMMUNICATION CO., LTD., Dongguan, Guangdong 523863 (CN)
(72) Inventor: LI, Gen, Dongguan, Guangdong 523863 (CN)
(74) Representative: Conti, Marco
(86) International application number: PCT/CN2022/144013
(87) International publication number: WO 2023/125952

(57) **Abstract**

This application discloses a PDCCH monitoring method and apparatus, a terminal, and a readable storage medium, pertaining to the field of communications technologies. The PDCCH monitoring method in embodiments of this application includes: determining, by a terminal, N1 first scheduling cells, where the N1 first scheduling cells are scheduling cells with a slot-group based PDCCH monitoring capability in serving cells configured for the terminal; determining, by the terminal, a target value corresponding to each first scheduling cell based on at least one combination value supported by the terminal and a search space corresponding to the N1 first scheduling cells; and performing, by the terminal, PDCCH monitoring based on target information corresponding to each first scheduling cell; where N1 is a positive integer, the target information includes the target value, and the combination value includes a first value and a second value, where the first value represents the number of slots included in a non-overlapping and consecutive slot group, the second value represents the number of slots configured for monitoring in the slot group for a preset search space, and the target value is one combination value or a first value included in one combination value.

## Description

### CROSS-REFERENCE TO RELATED APPLICATIONS

This application claims priority to Chinese Patent Application No. 202111665999.8, filed in China on December 31, 2021, which is incorporated herein by reference in its entirety.

### TECHNICAL FIELD

This application pertains to the field of communications technologies, and specifically, relates to a PDCCH monitoring method and apparatus, a terminal, and a readable storage medium.

### BACKGROUND

In a communication system, a physical downlink control channel (Physical downlink control channel, PDCCH) monitoring capability is usually defined based on a slot (slot) or a plurality of symbols (symbol). However, the communication system operating in high frequency band has a relatively large subcarrier spacing. Therefore, it is necessary to define the PDCCH monitoring capability based on X slots.

With the development of communications technologies, in the communication system, a plurality of serving cells may be configured for a terminal. How to perform PDCCH monitoring in a case that a plurality of serving cells is configured for the terminal is still under discussion. Therefore, how to implement the PDCCH monitoring in a case that a plurality of serving cells is configured for the terminal becomes an urgent problem to be resolved.

### SUMMARY

Embodiments of this application provide a PDCCH monitoring method and apparatus, a terminal, and a readable storage medium, which can implement PDCCH monitoring in a case that a plurality of serving cells is configured for a terminal.

According to a first aspect, a PDCCH monitoring method is provided, including:
determining, by a terminal, N1 first scheduling cells, where the N1 first scheduling cells are scheduling cells with a slot-group based PDCCH monitoring capability in serving cells configured for the terminal;
determining, by the terminal, a target value corresponding to each first scheduling cell based on at least one combination value supported by the terminal and a search space corresponding to the N1 first scheduling cells; and
performing, by the terminal, PDCCH monitoring based on target information corresponding to each first scheduling cell; where
N1 is a positive integer, the target information includes the target value, and the combination value includes a first value and a second value, where the first value represents the number of slots included in a non-overlapping and consecutive slot group, the second value represents the number of slots configured for monitoring in the slot group for a preset search space, and the target value is one combination value or a first value included in one combination value.

According to a second aspect, a PDCCH monitoring apparatus is provided, including:
a first determining module, configured to determine N1 first scheduling cells, where the N1 first scheduling cells are scheduling cells with a slot-group based PDCCH monitoring capability in serving cells configured for a terminal;
a second determining module, configured to determine a target value corresponding to each first scheduling cell based on at least one combination value supported by the terminal and a search space corresponding to the N1 first scheduling cells; and
a monitoring module, configured to perform PDCCH monitoring based on target information corresponding to each first scheduling cell; where
N1 is a positive integer, the target information includes the target value, and the combination value includes a first value and a second value, where the first value represents the number of slots included in a non-overlapping and consecutive slot group, the second value represents the number of slots configured for monitoring in the slot group for a preset search space, and the target value is one combination value or a first value included in one combination value.

According to a third aspect, a terminal is provided, where the terminal includes a processor and a memory, and a program or instructions capable of running on the processor are stored in the memory. When the program or the instructions are executed by the processor, the steps of the method according to the first aspect are implemented.

According to a fourth aspect, a terminal is provided, including a processor and a communication interface. The processor is configured to determine N1 first scheduling cells, where the N1 first scheduling cells are scheduling cells with a slot-group based PDCCH monitoring capability in serving cells configured for the terminal; and determine a target value corresponding to each first scheduling cell based on at least one combination value supported by the terminal and a search space corresponding to the N1 first scheduling cells. The communication interface is configured to perform PDCCH monitoring based on target information corresponding to each first scheduling cell; where N1 is a positive integer, the target information includes the target value, and the combination value includes a first value and a second value, where the first value represents the number of slots included in a non-overlapping and consecutive slot group, the second value represents the number of slots configured for monitoring in the slot group for a preset search space, and the target value is one combination value or a first value included in one combination value.

According to a fifth aspect, a readable storage medium is provided, where a program or instructions are stored in the readable storage medium, and when the program or the instructions are executed by a processor, the steps of the method according to the first aspect are implemented.

According to a sixth aspect, a chip is provided, where the chip includes a processor and a communication interface, the communication interface is coupled to the processor, and the processor is configured to run a program or instructions to implement the steps of the method according to the first aspect.

According to a seventh aspect, a computer program/program product is provided, where the computer program/program product is stored in a storage medium, and the computer program/program product is executed by at least one processor to implement the steps of the method according to the first aspect.

According to the embodiments of this application, the target value corresponding to each first scheduling cell is determined based on the at least one combination value supported by the terminal and the search space corresponding to the N1 first scheduling cells, and PDCCH monitoring is performed based on the target information corresponding to the first scheduling cell with the slot-group-based PDCCH monitoring capability. In this way, PDCCH monitoring can be implemented in a case that a plurality of serving cells is configured for the terminal. In addition, in a case that the terminal supports at least two combination values, different target values may be present for different first scheduling cells, thereby improving flexibility of PDCCH monitoring.

### BRIEF DESCRIPTION OF DRAWINGS

FIG. 1 is a structural diagram of a network system to which the embodiments of this application are applicable;
FIG. 2 is a flowchart of a PDCCH monitoring method according to an embodiment of this application;
FIG. 3 is a flowchart of a PDCCH monitoring apparatus according to an embodiment of this application;
FIG. 4 is a structural diagram of a communication device according to an embodiment of this application; and
FIG. 5 is a structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

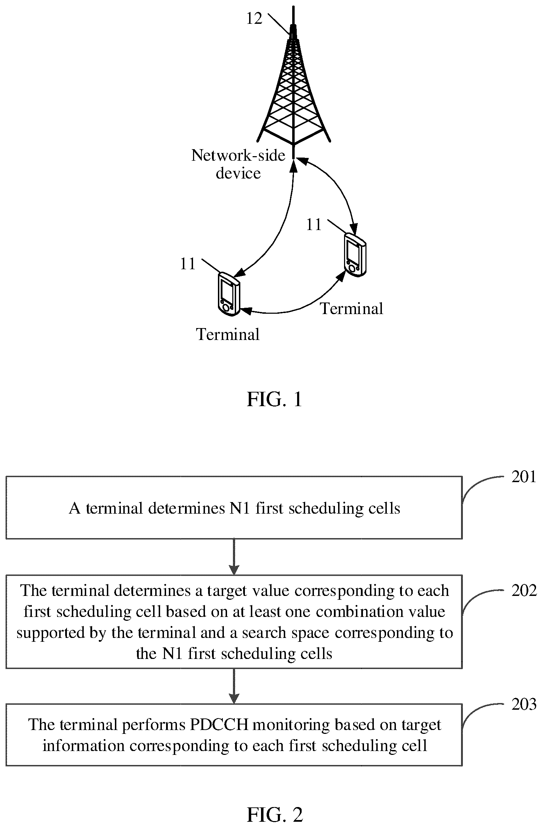

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a wireless local area network (Wireless Local Area Networks, WLAN) access point, a wireless fidelity Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

For ease of understanding, the following describes some content included in the embodiments of this application.

### I. First definition of PDCCH monitoring capability

The PDCCH monitoring capability can be divided into mandatory (Mandatory) and optional (Optional) capabilities.

First of all, mandatory without capability signaling (Mandatory without capability signaling) is as follows:
Control resource set (Control resource set, Coreset): One additional Coreset can be configured per bandwidth part (BandWidth Part, BWP) per cell (Cell) in addition to Coreset 0. The additional Coreset satisfies the following:
For frequency range (Frequency range, FR) 1: The frequency domain is configured based on a bitmap (bitmap) of 6 resource blocks (Resource Block, RB), and the time domain width can support configuration of 1 to 3 symbols. For FR 2: for type (Type) 0/0A/2 common search space (Common search space, CSS) and Type 1 CSS configured by non-dedicated radio resource control (Radio Resource Control, RRC), the frequency domain is configured based on a bitmap of 6 RBs, and the time domain width can support configuration of 1 to 3 symbols; for Type 1 and Type 3 CSS configured by dedicated RRC and UE-specific search space (UE-specific search space, USS), the frequency domain is configured based on a bitmap of 6 RBs, and the time domain width can support configuration of 1 to 2 symbols; resource element group (Resource Element Group, REG) bundle size (bundle size): 2/3/6; interleaved and non-interleaved CCE to REG mapping (Interleaved and non-interleaved CCE to REG mapping); supporting precoder granularity size (precoder granularity size) as REG bundle size; supporting dedicated demodulation reference signals (Dedicated demodulation reference signals, DM-RS) scrambling; and supporting configuration of one or more transmission configuration indicator (Transmission Configuration Indicator, TCI) states (states).

Unicast (unicast) PDCCH transmission in CSS and USS satisfies: aggregation level (Aggregation Level, AL) is 1, 2, 4, 8, or 16; for a scheduled secondary cell (Secondary Cell, Scell), each BWP has a maximum of three search space (Search Space, SS) sets (sets) for each slot, where such restriction is before SS dropping (dropping). For Type 1 and Type 3 CSS configured by dedicated RRC and USS, monitoring occasions (Monitoring occasions) are in the first three symbols of a slot. For Type0/0A/2 CSS (type0/0A/2-PDCCH CSS set) and Type 1 CSS configured by non-dedicated RRC, monitoring occasions may be in any one symbol of one slot and within a single span (single span) of one slot. A single span may be understood as three consecutive orthogonal frequency division multiplex (Orthogonal frequency division multiplex, OFDM) symbols.

Supported formats of downlink control information (Downlink Control Information, DCI) monitoring include 0_0, 0_1, 1_0, and 1_1.

For a frequency division duplex (Frequency Division Duplex, FDD) system, only one piece of DCI scheduling downlink (Downlink, DL) unicast transmission and one piece of DCI scheduling uplink (Uplink, UL) unicast transmission are processed per slot for each scheduled component carrier (Component Carrier, CC).

For a time division duplex (Time Division Duplex, TDD) system, only one piece of DCI scheduling DL unicast transmission and two pieces of DCI scheduling UL unicast transmission are processed per slot for each scheduled CC.

Secondly, mandatory with capability signaling (Mandatory with capability signaling) is as follows:
Coreset in FR2 satisfies: For Type 1 and Type 3 CSS configured by dedicated RRC and USS, the frequency domain is configured based on a bitmap of 6 RBs, and the time domain width can support configuration of 3 symbols.

Finally, the optional capability is as follows:
PDCCH monitoring single occasion (*pdcchMonitoringSingleOccasion*) satisfies: for FR1, the UE is indicated to support receiving, in any three consecutive symbols of one 15KHz slot, a PDCCH scrambled by a cell radio network temporary identifier (Cell Radio Network Temporary Identifier, C-RNTI) and a configured scheduling RNTI (Configured Scheduling RNTI, CS-RNTI).

PDCCH monitoring any *occasion* (*pdcch-MonitoringAnyOccasions*) satisfies: for a case without DCI gap (withoutDCI-gap), for Type 1 and Type 3 CSS configured by dedicated RRC and USS, monitoring occasions are in any one symbol of one slot, and are in line with blind decoding (Blind decoding, BD) budget (budget) limitation. For a case with DCI gap (withDCI-gap), for Type 1 and Type 3 CSS configured by dedicated RRC and USS, monitoring occasions are in any one symbol of one slot, but a gap limitation and BD budget limitation need to be satisfied between any two consecutive PDCCHs scrambled by C-RNTI, modulation and coding scheme (Modulation and coding scheme, MCS)-C-RNTI, or CS-RNTI, where the gap limitation includes: 2 symbols (symbols) at 15KHz, 4 symbols at 30KHz, 7 symbols at 30KHz or network core protocol (Network Core Protocol, NCP), and 14 symbols at 120KHz.

For a case of PDCCH monitoring any occasions with span gap (*pdcch-MonitoringAnyOccasionsWithSpanGap*), and a span pattern (span pattern) is determined based on UE-reported (x,y) values configured for monitoring occasions of all SSs, where the span pattern for each slot is the same. A starting position of the first span in the span pattern is a position of the 1st monitoring occasion of any one slot, and the span length is max{X1,Y1}, and a length of the last span may be shorter. A starting position of the next span is the 1st position of the monitoring occasion that is not included in the previous span; where X1 represents a maximum value of all CORESET durations (maximum value of all CORESET durations), and Y1 represents a minimum value of all candidate Ys reported by the terminal (minimum value of Y in the UE reported candidate value).

It is checked whether the span pattern satisfies a (X,Y) limitation of at least one reporting (reporting).

### II. Second definition of PDCCH monitoring capability

All PDCCH monitoring capabilities are optional capabilities, as follows:
For PDCCH monitoring (*pdcch-Monitoring*), a value of supported span may be reported per physical downlink shared channel (Physical downlink shared channel, PDSCH) processing type (Per PDSCH processing type) and per subcarrier spacing (subcarrier space), and a corresponding BD/CCE limitation is satisfied per span.

PDCCH-MonitoringMixed (pdcch-MonitoringMixed): supporting different PDCCH monitoring capability (pdcch monitoring capability) configurations for different serving cells (serving cell).

For PDCCH monitoring carrier aggregation (*pdcch-MonitoringCA*), the UE reports PDCCH monitoring (UE report pdcch-Monitoring), configures the maximum number of monitoring cells per span BD and CCE limitation, and also indicates whether span arrangement (span arrangement) is aligned (aligned).

### III. Processing of mixed PDCCH monitoring capabilities for terminals

For NR Rel-16, there are two cell types as follows:
Cell Type 1 (FR1/FR2): configured with a slot-based PDCCH monitoring capability; and
Cell Type 2 (FR1 only): configured with a span-based PDCCH monitoring capability.

For NR Rel-16 UEs, there may be configurations for the following cases (case):
Case 1: all configured scheduling cells belong to cell Type 1;
Case 2: all configured scheduling cells belong to cell Type 2; and
Case 3: at least one scheduling cell belongs to Cell Type 1 and at least one scheduling cell belongs to Cell Type 2.

For the maximum processing capability parameter, the UE makes reporting separately for each supported case. In addition, for each case, all cells are grouped based on different PDCCH processing capabilities, and the maximum processing capability parameter is reported separately.

### II. Second definition of PDCCH monitoring capability

The UE supports a capability of multi-slot PDCCH monitoring based on (Xs,Ys) in a 480K/960KHz cell or BWP, where a slot group includes Xs slots, and slot groups do not overlap and are consecutive; Ys slots are located in a slot group, and positions of Ys slots in each slot group are the same. For Type 1-PDCCH CSS set provided by dedicated higher layer signaling (Type1-PDCCH CSS set provided by dedicated higher layer signaling) and Type3-PDCCH CSS sets (Type3-PDCCH CSS sets), and USS sets, these monitoring occasions are limited to Ys slots in the slot group. For the type0/0A/2-PDCCH CSS sets and Type1-PDCCH CSS sets provided in system information block (System Information Block, SIB)1 (Type1-PDCCH CSS set provided in SIB1), these monitoring occasions may be in any slot of the slot group.

For symbol positions that can be monitored in each slot: If Y> 1 (480KHz and 960KHz), the mandatory capability is that UE needs to monitor only the first three symbols; if Y=1(960KHz), the mandatory capability is that a span for the UE in one slot satisfies the (7,3) limitation; if Y=1(480KHz), the mandatory capability is that a span for the UE in one slot satisfies the (4,3) and (7,3) limitations, and the maximum number of spans in one slot is 2.

The BD/CCE limitation is defined based on the granularity of slot group for all search spaces.

For values of Xs and Ys: if the subcarrier spacing (Subcarrier Spacing, SCS) is 480KHz, (4,1) is a mandatory value, and (4,2) is an optional value; and if the SCS is 960KHz, (8,1) is mandatory, (8,4), (4,2), and (4,1) are optional values.

The following describes in detail a PDCCH monitoring method provided in the embodiments of this application by using some embodiments and application scenarios thereof with reference to the accompanying drawings.

Referring to FIG. 2, the PDCCH monitoring method provided in the embodiments of this application includes the following steps.

Step 201: A terminal determines N1 first scheduling cells, where the N1 first scheduling cells are scheduling cells with a slot-group based PDCCH monitoring capability in serving cells configured for the terminal.

Step 202: The terminal determines a target value corresponding to each first scheduling cell based on at least one combination value supported by the terminal and a search space corresponding to the N1 first scheduling cells.

Step 203: The terminal performs PDCCH monitoring based on target information corresponding to each first scheduling cell.

N1 is a positive integer, the target information includes the target value, and the combination value includes a first value and a second value, where the first value represents the number of slots included in a non-overlapping and consecutive slot group, the second value represents the number of slots configured for monitoring in the slot group for a preset search space, and the target value is one combination value or a first value included in one combination value.

In this embodiment of this application, the serving cells configured for the terminal include a plurality of serving cells, at least part of the plurality of serving cells may be scheduling cells. For example, the serving cells configured for the terminal includes a plurality of serving cells, including N scheduling cells in total, where N is a positive integer, and the N scheduling cells can schedule all the serving cells configured for the terminal. The scheduling cell can perform self-scheduling and/or cross-carrier scheduling, self-scheduling can be understood as cell A scheduling cell A, and cross-carrier scheduling can be understood as cell A scheduling cell B.

The N scheduling cells may include N1 first scheduling cells, or may further include N2 second scheduling cells. The second scheduling cell is a scheduling cell other than the first scheduling cell in the serving cells configured for the terminal, and for example, may include a scheduling cell with a single-slot-based PDCCH monitoring capability and a scheduling cell with a symbol-level-span based PDCCH monitoring capability.

Optionally, the terminal may report or predefine parameters related to the slot-group-based PDCCH monitoring capability supported by the terminal, and the parameters related to the slot-group-based PDCCH monitoring capability include the at least one combination value. The first value may be expressed as Xs, the second value may be expressed as Ys, and then the combination value may be expressed as (Xs,Ys).

The terminal may select the target value corresponding to each first scheduling cell from at least one supported combination value based on a search space corresponding to N1 first scheduling cells, where target values corresponding to different first scheduling cells may be the same or different, or target values corresponding to part of first scheduling cells may be the same. The target value may include only the first value, or may include the first value and the second value. The first value included in the determined target value may be expressed as Xs0, and the second value included in the determined target value may be expressed as Ys0, so the target value may be Xs0 or (Xs0,Ys0).

After the target value corresponding to each first scheduling cell is determined, PDCCH monitoring may be performed on the scheduling cell based on the target value corresponding to the first scheduling cell.

According to this embodiment of this application, the target value corresponding to each first scheduling cell is determined based on the at least one combination value supported by the terminal and the search space corresponding to the N1 first scheduling cells, and PDCCH monitoring is performed based on the target information corresponding to the first scheduling cell with the slot-group-based PDCCH monitoring capability. In this way, PDCCH monitoring can be implemented in a case that a plurality of serving cells is configured for the terminal. In addition, in a case that the terminal supports at least two combination values, different target values may be present for different first scheduling cells, thereby improving flexibility of PDCCH monitoring.

Optionally, in some embodiments, before the determining, by a terminal, N1 first scheduling cells, the method further includes:
determining, by the terminal according to target indication information sent by a network-side device, a PDCCH monitoring capability type of each scheduling cell in the serving cells configured for the terminal; where
the PDCCH monitoring capability type is used for determining the N1 first scheduling cells.

It should be understood that the network-side device can indicate the PDCCH monitoring capability type of each scheduling cell implicitly or explicitly by using the target indication information. For example, in some embodiments, the target indication information may be used to indicate at least one of the following:
a PDCCH monitoring capability of each serving cell configured for the terminal;
a subcarrier spacing of each serving cell configured for the terminal;
a PDCCH monitoring capability for an active bandwidth part BWP of each serving cell configured for the terminal; and
a subcarrier spacing for an active BWP of each serving cell configured for the terminal.

In this embodiment of this application, in a case that the target indication information indicates the PDCCH monitoring capability of each serving cell configured for the terminal or the PDCCH monitoring capability for the active bandwidth part BWP of each serving cell configured for the terminal, indication may be specifically made by using indication information of the PDCCH monitoring capability. For example, the slot-group-based PDCCH monitoring capability is indicated by a specific capability indication value, and the single-slot-based PDCCH monitoring capability is indicated by another capability indication value. When the target indication information does not include any capability indication value, a specific PDCCH monitoring capability such as the single-slot-based PDCCH monitoring capability is considered by default. In a case that the target indication information indicates a subcarrier spacing of each serving cell configured for the terminal or a subcarrier spacing for the active BWP of each serving cell configured for the terminal, the terminal can determine the PDCCH monitoring capability of each serving cell based on a correspondence between subcarrier spacings and PDCCH monitoring capabilities. For example, in a case that the terminal is running or working on a 480K/960K active BWP of a serving cell, a multi-slot-group-based PDCCH monitoring capability is considered by default.

Optionally, in some embodiments, the target value corresponding to the first scheduling cell satisfies at least one of the following:
a first value included in the target value is a largest or smallest first value included in the at least one combination value;
in a case that all first values in the at least one combination value are the same, the first value included in the target value is a first value included in any one combination value;
in a case that the number of the combination values is 1, the target value is the combination value; and
in a case that the number of the combination values is greater than 1, the target value is selected from a target set according to a preset rule; where
the target set includes combination values corresponding to a case that a search space configured for the serving cell or an active BWP of the serving cell meets a first preset condition.

In this embodiment of this application, if a plurality of (Xs,Ys) values supported by the terminal has a same Xs, Xs0 is the Xs value. If the terminal supports a plurality of (Xs,Ys) values, the target set can be determined based on a first condition, and all slot groups determined based on combination values in the target set can make the search meet a first preset condition. In other words, the target set can be understood as all combination values making the search meet the first preset condition in the plurality of combination values supported by the terminal.

Optionally, in some embodiments, the preset rule includes at least one of the following:
rule 1: selecting a largest first value included in the target set as the first value of the target value;
rule 2: selecting a largest first value associated with a target object in the target set as the first value of the target value, where the target object includes at least one of blind decoding and control channel element;
rule 3: determining L1 combination values corresponding to the largest first value in the target set, and selecting a combination value with a smallest second value from the L1 combination values as the target value; and
rule 4: determining L2 combination values corresponding to the largest first value associated with the target object in the target set, and selecting a combination value with a smallest second value from the L2 combination values as the target value.

In this embodiment of this application, for rule 1 and rule 2, it can be understood that the target value is Xs0, and for rule 3 and rule 4, it can be understood that the target value is a combination value.

Optionally, for rule 3, it can be understood as: first selecting (Xs,Ys) with the largest Xs from the target set to obtain a first intermediate set, and then selecting (Xs,Ys) with the smallest Yx from the first intermediate set as (Xs0,Ys0). The first intermediate set includes L1 combination values, and the first value of each of the L1 combination values is the largest Xs.

Optionally, for rule 4, it can be understood as: first selecting a combination value (Xs,Ys) corresponding to the largest first value associated with a target object from the target set to obtain a second intermediate set, and then selecting (Xs,Ys) with the smallest Yx from the second intermediate set as (Xs0,Ys0). The second intermediate set includes L2 combination values, and the first value of each of the L2 combination values is the largest Xs.

Optionally, in some embodiments, a monitoring rule for performing PDCCH monitoring by the terminal based on the target information corresponding to each first scheduling cell satisfies at least one of the following:
the terminal performs PDCCH monitoring in each first scheduling cell according to a target object limitation corresponding to the first scheduling cell; and
dividing the N1 first scheduling cells into groups according to the target information to make each group conform to a total target object limitation, and performing PDCCH monitoring based on the total target object limitation; where
the target object includes at least one of blind decoding and a control channel element.

Optionally, the total target object limitation is applied in a case that M or a1*M1+a2*M2 is greater than a corresponding cell capacity parameter, and the cell capacity parameter Ncellcap is related to a combination of the PDCCH monitoring capability types corresponding to the serving cells configured for the terminal. M1 is the number of serving cells scheduled by the scheduling cell that are not configured with CoresetPoolIndex or that are configured with CoresetPoolIndex but only contain one index value; M2 is the number of serving cells scheduled by the scheduling cell that are configured with CoresetPoolIndex and contain a plurality of index values; and a1 and a2 are values predefined by the protocol, reported by the UE, or configured by a base station.

Optionally, for each serving cell scheduled by the first scheduling cell, the target object limitation corresponding to the first scheduling cell includes at least one of the following:
limitation condition 1: in a case that the first scheduling cell is not configured with a resource set pool index (CoresetPoolIndex) or the first scheduling cell includes only one control resource set pool index value, the terminal does not expect that the number of PDCCH candidates (PDCCH candidate) or blind decodings monitored on a target slot group exceeds a first preset value;
limitation condition 2: in a case that the first scheduling cell is not configured with a resource set pool index or the first scheduling cell includes only one control resource set pool index value, the terminal does not expect that the number of non-overlapping control channel elements monitored on the target slot group exceeds a second preset value;
limitation condition 3: in a case that the first scheduling cell includes at least two control resource set pool index values, the terminal does not expect that the number of PDCCH candidates or blind decodings corresponding to a same control resource set pool index and monitored on the target slot group exceeds the first preset value;
limitation condition 4: in a case that the first scheduling cell includes at least two control resource set pool index values, the terminal does not expect that the number of non-overlapping control channel elements corresponding to a same control resource set pool index and monitored on the target slot group exceeds the second preset value;
limitation condition 5: in a case that the first scheduling cell includes at least two control resource set pool index values, the terminal does not expect that the number of PDCCH candidates or blind decodings monitored on the target slot group exceeds the first preset value by R times, where R is a positive integer; and
limitation condition 6: in a case that the first scheduling cell includes at least two control resource set pool index values, the terminal does not expect that the number of non-overlapping control channel elements monitored on the target slot group exceeds the second preset value by R times, and a control resource set pool index configured for the first scheduling cell includes at least two index values; where
the target slot group is any one slot group including Xs0 slots on an active BWP of the first scheduling cell, and Xs0 is a first value included in the target value.

In this embodiment of this application, the foregoing limitation condition 1 and limitation condition 2 can be understood as follows: for each scheduled serving cell, the terminal does not expect to monitor Bmax PDCCH candidates/BDs or Cmax non-overlapping CCEs on each slot group including Xs0 slots on the active BWP of the scheduling cell, and the scheduling cell is not configured with CoresetPoolIndex or is configured with CoresetPoolIndex but includes only one index value, where Bmax is the first preset value and Cmax is the second preset value.

The foregoing limitation condition 3 and limitation condition 4 can be understood as follows: for each scheduled serving cell, the terminal does not expect to monitor Bmax PDCCH candidates/BDs or Cmax non-overlapping CCEs on Coresets with a same CoresetPoolIndex and each slot group including Xs0 slots for the active BWP of the scheduling cell, and the scheduling cell is configured with CoresetPoolIndex and includes a plurality of index values.

The foregoing limitation condition 5 and limitation condition 6 can be understood as follows: for each scheduled serving cell, the terminal does not expect to monitor R*Bmax PDCCH candidates/BDs or R*Cmax non-overlapping CCEs on each slot group including Xs0 slots for the active BWP of the scheduling cell, and the scheduling cell is configured with CoresetPoolIndex and includes a plurality of index values, where R is a value predefined by the protocol, reported by the UE, or configured by the base station.

Optionally, the total target object limitation includes at least one of the following:
limitation condition 7: the terminal does not expect that the number of PDCCH candidates or blind decodings monitored on a first slot group exceeds a third preset value;
limitation condition 8: the terminal does not expect that the number of non-overlapping control channel elements monitored on the first slot group exceeds a fourth preset value;
limitation condition 9: the terminal does not expect that the number of PDCCH candidates or blind decodings monitored on a first slot group exceeds a fifth preset value; and
limitation condition 10: the terminal does not expect that the number of non-overlapping control channel elements monitored on the first slot group exceeds a sixth preset value; where
the first slot group is a slot group including Xs0 slots on active BWPs of all the first scheduling cells in any one group; Xs0 is a first value included in the target value; the third preset value and the fourth preset value are determined based on the number of serving cells scheduled by the first scheduling cells in the group and the number of serving cells scheduled by the N1 first scheduling cells; and the fifth preset value and the sixth preset value are determined based on the number of first serving cells, the number of second serving cells, the number of third serving cells, and the number of fourth serving cells, where the first serving cell is a serving cell scheduled by a first-type first scheduling cell in the group, the second serving cell is a serving cell scheduled by a second-type first scheduling cell in the group, the third serving cell is a serving cell scheduled by a first-type first scheduling cell in the N1 first scheduling cells, and the fourth serving cell is a serving cell scheduled by a second-type first scheduling cell in the N1 first scheduling cells.

It should be noted that in this embodiment of this application, a manner of grouping scheduling cells can be set according to actual needs. For example, in some embodiments, grouping can be performed based on the target information to meet at least one of the following:
cells with same SCS µ and (Xs0, Ys0) are divided into one group;
cells with same SCS µ and Xs0 are divided into one group; and
cells with SCS µ and Xs0 meeting same µ/Xs0 and Xs0/µ are divided into one group.

It should be understood that in this embodiment of this application, the SCS may be an SCS of a cell carrier or an SCS of an active BWP.

Optionally, the first-type first scheduling cell is a scheduling cell that is not configured with a control resource set pool index or that only includes one control resource set pool index value; and
the second-type first scheduling cell is a scheduling cell including at least two control resource set pool index values.

Optionally, at least one of the third preset value and the fourth preset value is B₁, and B₁ satisfies:
B₁=floor(Wₘₐₓ*T1/M), where Wₘₐₓ represents the maximum number of PDCCH candidates, blind decodings, or control channel elements monitored by the terminal, T1 represents the number of serving cells scheduled by the first scheduling cells in the group, and M represents the number of serving cells scheduled by the N1 first scheduling cells.

Optionally, at least one of the fifth preset value and the sixth preset value is B₂, and B₂ satisfies:
B₂=floor(Wₘₐₓ*(a1*T2+a2*T3)/(a1*M1+a2*M2)), where Wₘₐₓ Indicates the maximum number of PDCCH candidates or blind decodings monitored by the terminal, T2 indicates the number of first serving cells, T3 indicates the number of second serving cells, M1 indicates the number of third serving cells, and M2 indicates the number of fourth serving cells, and a1 and a2 are constants.

In this embodiment of this application, the foregoing limitation condition 7 and limitation condition 8 can be understood as follows:
the terminal does not expect to monitor more than Btotal=floor(Ncellcap*Bmax*T1/M) PDCCH candidates/BDs or Ctotal=floor(Ncellcap*Cmax*T1/M) non-overlapping CCEs on each slot group including Xs0 slots for the active BWPs of all the scheduling cells in the group, where T1 is the total number of serving cells scheduled by the scheduling cells in the group.

The foregoing condition 9 and condition 10 can be understood as follows: the terminal does not expect to monitor more than Btotal=floor(Ncellcap*Bmax*(al*T2+a2*T3)/(a1*M1+a2*M2)) PDCCH candidates/BDs or Ctotal=floor(Ncellcap*Cmax*(a1*T2+a2*T3)/ (a1*M1+a2*M2)) non-overlapping CCEs on each slot group including Xs0 slots for the active BWPs of all the scheduling cells in the group.

Optionally, in some embodiments, the target information further includes a subcarrier spacing.

Optionally, that the terminal performs PDCCH monitoring based on the target information corresponding to each first scheduling cell includes:
for each first scheduling cell, assuming, by the terminal, that the first scheduling cell is a virtual serving cell with a preset subcarrier spacing and a single-slot-based PDCCH monitoring capability; and
performing, by the terminal, PDCCH monitoring after performing preset grouping processing on the virtual serving cell and a second scheduling cell other than the first scheduling cell in the serving cells configured for the terminal.

In this embodiment of this application, based on the SCS and/or target value of each cell, each serving cell with an SCS being µ and with a multi-slot-based PDCCH monitoring capability can be equivalent to a virtual serving cell with an SCS being µ' and with a single-slot-based PDCCH monitoring capability, so as to obtain N1' virtual scheduling cells. Then, preset grouping processing is performed on the Nl' virtual scheduling cells and the second scheduling cells, and PDCCH monitoring is performed. The second scheduling cell can alternatively be understood as a scheduling cell with a single-slot-based PDCCH monitoring capability, and µ' can be understood as the preset subcarrier spacing.

Optionally, in some embodiments, the preset subcarrier spacing satisfies at least one of the following:
the preset subcarrier spacing is a subcarrier spacing specified by a protocol or configured by a network-side device; and
the preset subcarrier spacing is a quotient of an actual subcarrier spacing of the first scheduling cell and a first value included in the target value.

Optionally, at least one of a slot boundary, a subframe boundary, and a frame boundary of the virtual serving cell is associated with at least one of the following: a slot boundary of a corresponding first scheduling cell, a subframe boundary of the corresponding first scheduling cell, a frame boundary of the corresponding first scheduling cell, a configured time-domain offset of the corresponding first scheduling cell, and a time-domain offset of the corresponding first scheduling cell relative to a non-virtual scheduling cell with a preset subcarrier spacing.

Optionally, one slot of the virtual serving cell includes at least one slot group determined for a corresponding first scheduling cell.

Optionally, a time-domain offset between the virtual serving cell and a primary serving cell is associated with at least one of the following:
a time-domain offset configured for the corresponding first scheduling cell relative to the primary serving cell;
a subcarrier spacing of the corresponding first scheduling cell; and
a subcarrier spacing of the virtual serving cell.

Optionally, the preset grouping processing includes:
classifying the virtual scheduling cells and the second scheduling cells along according to a PDCCH monitoring capability type to obtain P1 scheduling cells and Q1 scheduling cells, where the P1 scheduling cells are cells based on a first PDCCH monitoring capability type, the Q1 scheduling cells are cells based on a second PDCCH monitoring capability type, and P1 and Q1 are positive integers; and
separately dividing the P1 scheduling cells and the Q1 scheduling cells into groups based on a subcarrier spacing.

In this embodiment of this application, after the scheduling cells are grouped based on the SCS, the total BD/CCE limitation can be satisfied for each group, and PDCCH monitoring can be performed under the total BD/CCE limitation. The total BD/CCE limitation is applied to a case that P/a1*P11+a2*P12 or Q/a1*Q11+a2*Q12 is greater than a corresponding cell capacity parameter, and the cell capacity parameter Ncellcap is related to a case of combination of an equivalent PDCCH monitoring capability type of N1 virtual scheduling cells and a PDCCH monitoring capability type of (N-N1) scheduling cells.

Optionally, P is the number of serving cells scheduled by P1 scheduling cells, and Q is the number of serving cells scheduled by Q1 scheduling cells. P11 and Q11 are the number of serving cells scheduled by the scheduling cell that is not configured with CoresetPoolIndex or that is configured with CoresetPoolIndex but includes only one index value in the group. P12 and Q12 are the number of serving cells scheduled by the scheduling cell that is configured with CoresetPoolIndex and includes a plurality of index values.

It should be noted that in this embodiment of this application, the active BWP is an active BWP of a serving cell in an active state or a first active BWP configured for a serving cell in an inactive state, and the SCS is an SCS of a cell carrier, an active BWP of the serving cell in the active state, or the first active BWP configured for the serving cell in the inactive state.

Optionally, in some embodiments, the serving cells configured for the terminal meet at least one of the following conditions:
frame or subframe boundaries of all the serving cells configured for the terminal are aligned;
frame or subframe boundaries of all scheduling cells in the serving cells configured for the terminal are aligned; and
frame or subframe boundaries of the N1 first scheduling cells are aligned.

To better understand this application, the following provides descriptions in detail by using some examples:

### Embodiment 1

The UE reports information about the PDCCH monitoring capability, including:
for the multi-slot PDCCH monitoring capability for 480KHz, (Xs,Ys)=(4,1),(4,2) is supported; and
for the multi-slot PDCCH monitoring capability for 960KHz, (Xs, Ys)=(8,1),(8,4),(4,2),(4,1) is supported.

The UE is configured with 6 serving cells, where
Cell#0 is a primary serving cell (Primary cell, Pcell), with an SCS for an active BWP being 120KHz, self-scheduling, and a slot-based PDCCH monitoring capability;
Cell#1 is Scell, with an SCS for an active BWP being 480KHz, and is cross-carrier scheduled by Pcell;
Cell#2 is Scell, with an SCS for an active BWP being 480KHz, self-scheduling, and a multi-slot-based PDCCH monitoring capability;
Cell#3 is Scell, with an SCS for an active BWP being 960KHz, self-scheduling, and a multi-slot-based PDCCH monitoring capability;
Cell#4 is Scell, with an SCS for an active BWP being 960KHz, self-scheduling, and a multi-slot-based PDCCH monitoring capability; and
Cell#5 is Scell, with an SCS for an active BWP being 960KHz, and is cross-carrier scheduled by Cell#4.

In this case, N=4, and the N scheduling cells include Cell#0, 2, 3, and 4. N1=3, and the N1 scheduling cells include Cell#2, 3, and 4. M=4, and the M serving cells include Cell#2, 3, 4, and 5.

The values of (Xs,Ys) satisfying the first condition that are determined according to a search space configuration for the N1 scheduling cells include:
Cell#2: (4, 1), (4, 2);
Cell#3: (8, 1), (8, 4), (4, 1), (4, 2);
Cell#4: (4, 2).

The maximum value of Xs and the minimum value of Ys are taken to obtain Xs0 and/or Ys0, that is:
Cell#2: (4, 1);
Cell#3: (8, 1);
Cell#4: (4, 2).

In Cell#2, Cell#3, and Cell#4, the terminal meets the BD/CCE limitations corresponding to (Xs0, Ys0) determined respectively.

First, the scheduling cells are classified based on the PDCCH monitoring capability type, that is, Cell#0 is a first type; Cell#2, 3, and 4 are a second type.

In the mixed scenario of slot-based and multi-slot-based, a cell capacity parameter corresponding to the multi-slot-based PDCCH monitoring capability is 2. Because M=4>2, the scheduling cells need to be grouped, and each group is subject to the total BD/CCE limitation. For example, based on a same SCS and (Xs0,Ys0), Cell#2, 3, and 4 each are divided into one group. For the group of Cell#4, T1=2.

### Embodiment 2

The UE reports information about the PDCCH monitoring capability, including:
for the multi-slot PDCCH monitoring capability for 480KHz, (Xs,Ys)=(4,1),(4,2) is supported; and
for the multi-slot PDCCH monitoring capability for 960KHz, (Xs,Ys)=(8,1),(8,4),(4,2),(4,1) is supported.

The UE is configured with 6 serving cells, where
Cell#0 is Pcell, with an SCS for an active BWP being 120KHz, self-scheduling, and a slot-based PDCCH monitoring capability;
Cell#1 is Scell, with an SCS for an active BWP being 480KHz, and is cross-carrier scheduled by Pcell.
Cell#2 is Scell, with an SCS for an active BWP being 480KHz, self-scheduling, and a multi-slot-based PDCCH monitoring capability;
Cell#3 is Scell, with an SCS for an active BWP being 960KHz, self-scheduling, and a multi-slot-based PDCCH monitoring capability;
Cell#4 is Scell, with an SCS for an active BWP being 960KHz, self-scheduling, and a multi-slot-based PDCCH monitoring capability; and
Cell#5 is Scell, with an SCS for an active BWP being 960KHz, and is cross-carrier scheduled by Cell#4.

In this case, N=4, and the N scheduling cells include Cell#0, 2, 3, and 4. N1=3, and the N1 scheduling cells include Cell#2, 3, and 4. M=4, and the M serving cells include Cell#2, 3, 4, and 5.

The values of (Xs,Ys) satisfying the first condition that are determined according to a search space configuration for the N1 scheduling cells include:
Cell#2: (4, 1), (4, 2);
Cell#3: (8, 1), (8, 4), (4, 1), (4, 2);
Cell#4: (4, 2).

The maximum value of Xs and the minimum value of Ys are taken to obtain Xs0 and/or Ys0, that is:
Cell#2: (4, 1);
Cell#3: (8, 1);
Cell#4: (4, 2).

In Cell#2, Cell#3, and Cell#4, the terminal meets the BD/CCE limitations corresponding to (Xs0, Ys0) determined respectively.

Cell#2, Cell#3, and Cell#4 are made equivalent to slot-based virtual scheduling cells with SCS=120KHz, and are combined with Cell#0 for processing, that is, Cell#0, 2, 3, and 4 belong to a same type. In addition, in a case that the number of serving cells scheduled exceeds the cell capacity parameter, the total BD/CCE budget limitation is applied based on a slot of 120K.

For the PDCCH monitoring method provided in this embodiment of this application, the execution subject may be a PDCCH monitoring apparatus. In the embodiments of this application, the PDCCH monitoring method being performed by the PDCCH monitoring apparatus is used as an example to describe the PDCCH monitoring apparatus provided in the embodiments of this application.

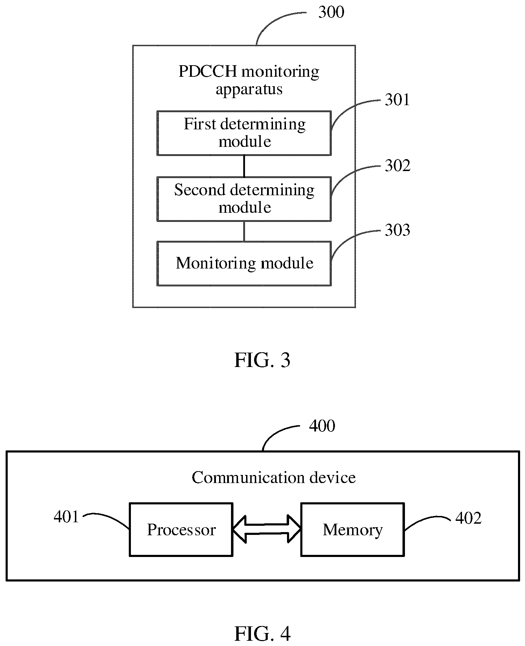

Referring to FIG. 3, an embodiment of this application further provides a PDCCH monitoring apparatus. As shown in FIG. 3, the PDCCH monitoring apparatus 300 includes:
a first determining module 301, configured to determine N1 first scheduling cells, where the N1 first scheduling cells are scheduling cells with a slot-group based PDCCH monitoring capability in serving cells configured for a terminal;
a second determining module 302, configured to determine a target value corresponding to each first scheduling cell based on at least one combination value supported by the terminal and a search space corresponding to the N1 first scheduling cells; and
a monitoring module 303, configured to perform PDCCH monitoring based on target information corresponding to each first scheduling cell; where
N1 is a positive integer, the target information includes the target value, and the combination value includes a first value and a second value, where the first value represents the number of slots included in a non-overlapping and consecutive slot group, the second value represents the number of slots configured for monitoring in the slot group for a preset search space, and the target value is one combination value or a first value included in one combination value.

Optionally, the PDCCH monitoring apparatus further includes:
a third determining module, configured to determine, according to target indication information sent by a network-side device, a PDCCH monitoring capability type of each scheduling cell in the serving cells configured for the terminal; where
the PDCCH monitoring capability type is used for determining the N1 first scheduling cells.

Optionally, the target indication information is used to indicate at least one of the following:
a PDCCH monitoring capability of each serving cell configured for the terminal;
a subcarrier spacing of each serving cell configured for the terminal;
a PDCCH monitoring capability for an active bandwidth part BWP of each serving cell configured for the terminal; and
a subcarrier spacing for an active BWP of each serving cell configured for the terminal.

Optionally, the target value corresponding to the first scheduling cell satisfies at least one of the following:
a first value included in the target value is a largest or smallest first value included in the at least one combination value;
in a case that all first values in the at least one combination value are the same, the first value included in the target value is a first value included in any one combination value;
in a case that the number of the combination values is 1, the target value is the combination value; and
in a case that the number of the combination values is greater than 1, the target value is selected from a target set according to a preset rule; where
the target set includes combination values corresponding to a case that a search space configured for the serving cell or an active BWP of the serving cell meets a first preset condition.

Optionally, the first preset condition includes at least one of the following:
monitoring slots for a first search space group are preset consecutive Ys slots in a slot group including Xs slots, and the Ys slots are spaced apart by Xs*K slots, where K is a positive integer; and
a span between a first slot and a second slot for the first search space group in all slot groups including Xs slots is less than or equal to Ys slots; where
the first slot is the 1st slot configured with monitoring occasion, and the second slot is the last slot configured with monitoring occasion; Xs represents a first value of the combination value, Ys represents a second value of the combination value, and the first search space group is at least one preset-type search space configured for the serving cell or the active BWP of the serving cell.

Optionally, the preset rule includes at least one of the following:
selecting a largest first value included in the target set as the first value of the target value;
selecting a largest first value associated with a target object in the target set as the first value of the target value, where the target object includes at least one of blind decoding and control channel element;
determining L1 combination values corresponding to the largest first value in the target set, and selecting a combination value with a smallest second value from the L1 combination values as the target value; and
determining L2 combination values corresponding to the largest first value associated with the target object in the target set, and selecting a combination value with a smallest second value from the L2 combination values as the target value.

Optionally, a monitoring rule for performing PDCCH monitoring by the terminal based on the target information corresponding to each first scheduling cell satisfies at least one of the following:
the terminal performs PDCCH monitoring in each first scheduling cell according to a target object limitation corresponding to the first scheduling cell; and
dividing the N1 first scheduling cells into groups according to the target information to make each group conform to a total target object limitation, and performing PDCCH monitoring based on the total target object limitation; where
the target object includes at least one of blind decoding and a control channel element.

Optionally, for each serving cell scheduled by the first scheduling cell, the target object limitation corresponding to the first scheduling cell includes at least one of the following:
in a case that the first scheduling cell is not configured with a resource set pool index or the first scheduling cell includes only one control resource set pool index value, the terminal does not expect that the number of PDCCH candidates or blind decodings monitored on a target slot group exceeds a first preset value;
in a case that the first scheduling cell is not configured with a resource set pool index or the first scheduling cell includes only one control resource set pool index value, the terminal does not expect that the number of non-overlapping control channel elements monitored on the target slot group exceeds a second preset value;
in a case that the first scheduling cell includes at least two control resource set pool index values, the terminal does not expect that the number of PDCCH candidates or blind decodings corresponding to a same control resource set pool index and monitored on the target slot group exceeds the first preset value;
in a case that the first scheduling cell includes at least two control resource set pool index values, the terminal does not expect that the number of non-overlapping control channel elements corresponding to a same control resource set pool index and monitored on the target slot group exceeds the second preset value;
in a case that the first scheduling cell includes at least two control resource set pool index values, the terminal does not expect that the number of PDCCH candidates or blind decodings monitored on the target slot group exceeds the first preset value by R times, where R is a positive integer; and
in a case that the first scheduling cell includes at least two control resource set pool index values, the terminal does not expect that the number of non-overlapping control channel elements monitored on the target slot group exceeds the second preset value by R times, and a control resource set pool index configured for the first scheduling cell includes at least two index values; where
the target slot group is any one slot group including Xs0 slots on an active BWP of the first scheduling cell, and Xs0 is a first value included in the target value.

Optionally, the total target object limitation includes at least one of the following:
the terminal does not expect that the number of PDCCH candidates or blind decodings monitored on a first slot group exceeds a third preset value;
the terminal does not expect that the number of non-overlapping control channel elements monitored on the first slot group exceeds a fourth preset value;
the terminal does not expect that the number of PDCCH candidates or blind decodings monitored on a first slot group exceeds a fifth preset value; and
the terminal does not expect that the number of non-overlapping control channel elements monitored on the first slot group exceeds a sixth preset value; where
the first slot group is a slot group including Xs0 slots on active BWPs of all the first scheduling cells in any one group; Xs0 is a first value included in the target value; the third preset value and the fourth preset value are determined based on the number of serving cells scheduled by the first scheduling cells in the group and the number of serving cells scheduled by the N1 first scheduling cells; and the fifth preset value and the sixth preset value are determined based on the number of first serving cells, the number of second serving cells, the number of third serving cells, and the number of fourth serving cells, where the first serving cell is a serving cell scheduled by a first-type first scheduling cell in the group, the second serving cell is a serving cell scheduled by a second-type first scheduling cell in the group, the third serving cell is a serving cell scheduled by a first-type first scheduling cell in the N1 first scheduling cells, and the fourth serving cell is a serving cell scheduled by a second-type first scheduling cell in the N1 first scheduling cells.

Optionally, the first-type first scheduling cell is a scheduling cell that is not configured with a control resource set pool index or that only includes one control resource set pool index value; and
the second-type first scheduling cell is a scheduling cell including at least two control resource set pool index values.

Optionally, at least one of the third preset value and the fourth preset value is B₁, and B₁ satisfies:
B₁=floor(Wₘₐₓ*T1/M), where Wₘₐₓ represents the maximum number of PDCCH candidates, blind decodings, or control channel elements monitored by the terminal, T1 represents the number of serving cells scheduled by the first scheduling cells in the group, and M represents the number of serving cells scheduled by the N1 first scheduling cells.

Optionally, at least one of the fifth preset value and the sixth preset value is B₂, and B₂ satisfies:
B₂=floor(Wₘₐₓ*(a1*T2+a2*T3)/(a1*M1+a2*M2)), where Wₘₐₓ Indicates the maximum number of PDCCH candidates or blind decodings monitored by the terminal, T2 indicates the number of first serving cells, T3 indicates the number of second serving cells, M1 indicates the number of third serving cells, and M2 indicates the number of fourth serving cells, and a1 and a2 are constants.

Optionally, the target information further includes a subcarrier spacing.

Optionally, the monitoring module 303 is specifically configured to: for each first scheduling cell, assume that the first scheduling cell is a virtual serving cell with a preset subcarrier spacing and a single-slot-based PDCCH monitoring capability; and perform PDCCH monitoring after preset grouping processing is performed on the virtual serving cell and a second scheduling cell other than the first scheduling cell in the serving cells configured for the terminal.

Optionally, the preset subcarrier spacing satisfies at least one of the following:
the preset subcarrier spacing is a subcarrier spacing specified by a protocol or configured by a network-side device; and
the preset subcarrier spacing is a quotient of an actual subcarrier spacing of the first scheduling cell and a first value included in the target value.

Optionally, at least one of a slot boundary, a subframe boundary, and a frame boundary of the virtual serving cell is associated with at least one of the following: a slot boundary of a corresponding first scheduling cell, a subframe boundary of the corresponding first scheduling cell, a frame boundary of the corresponding first scheduling cell, a configured time-domain offset of the corresponding first scheduling cell, and a time-domain offset of the corresponding first scheduling cell relative to a non-virtual scheduling cell with a preset subcarrier spacing.

Optionally, one slot of the virtual serving cell includes at least one slot group determined for a corresponding first scheduling cell.

Optionally, a time-domain offset between the virtual serving cell and a primary serving cell is associated with at least one of the following:
a time-domain offset configured for the corresponding first scheduling cell relative to the primary serving cell;
a subcarrier spacing of the corresponding first scheduling cell; and
a subcarrier spacing of the virtual serving cell.

Optionally, the preset grouping processing includes:
classifying the virtual scheduling cells and the second scheduling cells along according to a PDCCH monitoring capability type to obtain P1 scheduling cells and Q1 scheduling cells, where the P1 scheduling cells are cells based on a first PDCCH monitoring capability type, the Q1 scheduling cells are cells based on a second PDCCH monitoring capability type, and P1 and Q1 are positive integers; and
separately dividing the P1 scheduling cells and the Q1 scheduling cells into groups based on a subcarrier spacing.

Optionally, the serving cells configured for the terminal meet at least one of the following conditions:
frame or subframe boundaries of all the serving cells configured for the terminal are aligned;
frame or subframe boundaries of all scheduling cells in the serving cells configured for the terminal are aligned; and
frame or subframe boundaries of the N1 first scheduling cells are aligned.

According to this embodiment of this application, the target value corresponding to each first scheduling cell is determined based on the at least one combination value supported by the terminal and the search space corresponding to the N1 first scheduling cells, and PDCCH monitoring is performed based on the target information corresponding to the first scheduling cell with the slot-group-based PDCCH monitoring capability. In this way, PDCCH monitoring can be implemented in a case that a plurality of serving cells is configured for the terminal. In addition, in a case that the terminal supports at least two combination values, different target values may be present for different first scheduling cells, thereby improving flexibility of PDCCH monitoring.

The PDCCH monitoring apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The PDCCH monitoring apparatus provided in this embodiment of this application is capable of implementing the processes implemented in the method embodiments in FIG. 2, with the same technical effects achieved. To avoid repetition, details are not described herein again.

Optionally, as shown in FIG. 4, an embodiment of this application further provides a communication device 400, including a processor 401, a memory 402, and a program or instructions stored in the memory 402 and capable of running on the processor 401. For example, in a case that the communication device 400 is a terminal, when the program or the instructions are executed by the processor 401, the processes of the foregoing embodiments of the PDCCH monitoring method are implemented, with the same technical effects achieved. To avoid repetition, details are not described herein again.

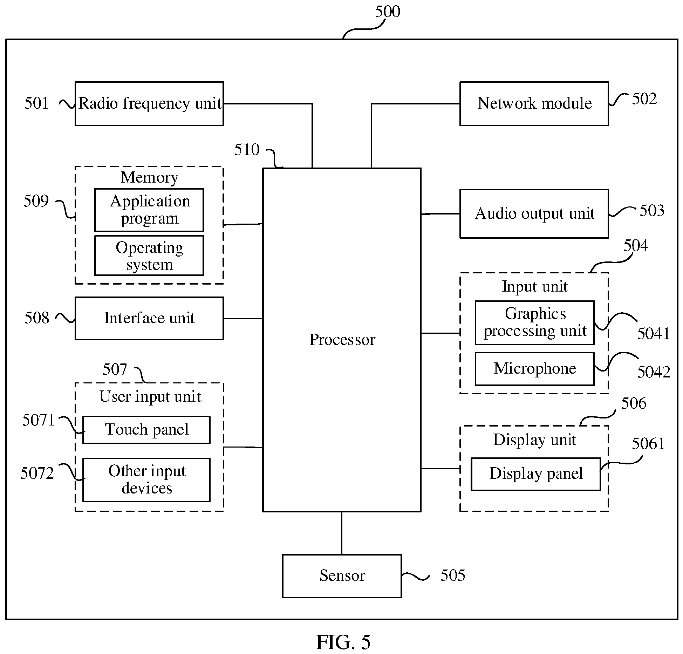

An embodiment of this application further provides a terminal, including a processor and a communication interface. The processor is configured to determine N1 first scheduling cells, where the N1 first scheduling cells are scheduling cells with a slot-group based PDCCH monitoring capability in serving cells configured for the terminal; and determine a target value corresponding to each first scheduling cell based on at least one combination value supported by the terminal and a search space corresponding to the N1 first scheduling cells. The communication interface is configured to perform PDCCH monitoring based on target information corresponding to each first scheduling cell; where N1 is a positive integer, the target information includes the target value, and the combination value includes a first value and a second value, where the first value represents the number of slots included in a non-overlapping and consecutive slot group, the second value represents the number of slots configured for monitoring in the slot group for a preset search space, and the target value is one combination value or a first value included in one combination value. The terminal embodiments correspond to the foregoing terminal-side method embodiments, and the implementation processes and implementations of the foregoing method embodiments can be applied to the terminal embodiments, with the same technical effects achieved. Specifically, FIG. 5 is a schematic diagram of a hardware structure of a terminal for implementing the embodiments of this application.

The terminal 500 includes but is not limited to at least part of components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (for example, a battery) supplying power to the components, and the power supply may be logically connected to the processor 510 through a power management system. In this way, functions such as charge management, discharge management, and power consumption management are implemented by using the power management system. The structure of the terminal shown in FIG. 5 does not constitute any limitation on the terminal. The terminal may include more or fewer components than shown in the figure, or a combination of some components, or the components disposed differently. Details are not described herein again.

It can be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode, and the like. The user input unit 507 may include at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function key (such as a volume control key or a power on/off key), a trackball, a mouse, a joystick, and the like. Details are not described herein.

In this embodiment of this application, the radio frequency unit 501 receives downlink data from a network-side device, and then sends the downlink data to the processor 510 for processing. In addition, the radio frequency unit 501 may sends uplink data to the network-side device. Generally, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may include a first storage area for storing a program or instructions and a second storage area for storing data. The first storage area may store an operating system, an application program or instruction required by at least one function (for example, a sound playback function or an image playback function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 509 in the embodiments of this application includes but is not limited to these and any other suitable types of memories.

The processor 510 may include one or more processing units. Optionally, an application processor and a modem processor may be integrated in the processor 510. This application processor primarily processes operations involving an operating system, user interfaces, application programs, and the like. The modem processor primarily processes radio communication signals, for example, being a baseband processor. It can be understood that the modem processor may alternatively be not integrated in the processor 510.

The processor 510 is configured to determine N1 first scheduling cells, where the N1 first scheduling cells are scheduling cells with a slot-group based PDCCH monitoring capability in serving cells configured for the terminal; and determine a target value corresponding to each first scheduling cell based on at least one combination value supported by the terminal and a search space corresponding to the N1 first scheduling cells.

The radio frequency unit 501 is further configured to: perform PDCCH monitoring based on target information corresponding to each first scheduling cell.

N1 is a positive integer, the target information includes the target value, and the combination value includes a first value and a second value, where the first value represents the number of slots included in a non-overlapping and consecutive slot group, the second value represents the number of slots configured for monitoring in the slot group for a preset search space, and the target value is one combination value or a first value included in one combination value.

According to the embodiments of this application, the target value corresponding to each first scheduling cell is determined based on the at least one combination value supported by the terminal and the search space corresponding to the N1 first scheduling cells, and PDCCH monitoring is performed based on the target information corresponding to the first scheduling cell with the slot-group-based PDCCH monitoring capability. In this way, PDCCH monitoring can be implemented in a case that a plurality of serving cells is configured for the terminal. In addition, in a case that the terminal supports at least two combination values, different target values may be present for different first scheduling cells, thereby improving flexibility of PDCCH monitoring.

Optionally, the radio frequency unit 501 is further configured to: determine, according to target indication information sent by a network-side device, a PDCCH monitoring capability type of each scheduling cell in the serving cells configured for the terminal; where
the PDCCH monitoring capability type is used for determining the N1 first scheduling cells.

Optionally, the target indication information is used to indicate at least one of the following:
a PDCCH monitoring capability of each serving cell configured for the terminal;
a subcarrier spacing of each serving cell configured for the terminal;
a PDCCH monitoring capability for an active bandwidth part BWP of each serving cell configured for the terminal; and
a subcarrier spacing for an active BWP of each serving cell configured for the terminal.

Optionally, the target value corresponding to the first scheduling cell satisfies at least one of the following:
a first value included in the target value is a largest or smallest first value included in the at least one combination value;
in a case that all first values in the at least one combination value are the same, the first value included in the target value is a first value included in any one combination value;
in a case that the number of the combination values is 1, the target value is the combination value; and
in a case that the number of the combination values is greater than 1, the target value is selected from a target set according to a preset rule; where
the target set includes combination values corresponding to a case that a search space configured for the serving cell or an active BWP of the serving cell meets a first preset condition.

Optionally, the first preset condition includes at least one of the following:
monitoring slots for a first search space group are preset consecutive Ys slots in a slot group including Xs slots, and the Ys slots are spaced apart by Xs*K slots, where K is a positive integer; and
a span between a first slot and a second slot for the first search space group in all slot groups including Xs slots is less than or equal to Ys slots; where
the first slot is the 1st slot configured with monitoring occasion, and the second slot is the last slot configured with monitoring occasion; Xs represents a first value of the combination value, Ys represents a second value of the combination value, and the first search space group is at least one preset-type search space configured for the serving cell or the active BWP of the serving cell.

Optionally, the preset rule includes at least one of the following:
selecting a largest first value included in the target set as the first value of the target value;
selecting a largest first value associated with a target object in the target set as the first value of the target value, where the target object includes at least one of blind decoding and control channel element;
determining L1 combination values corresponding to the largest first value in the target set, and selecting a combination value with a smallest second value from the L1 combination values as the target value; and
determining L2 combination values corresponding to the largest first value associated with the target object in the target set, and selecting a combination value with a smallest second value from the L2 combination values as the target value.

Optionally, a monitoring rule for performing PDCCH monitoring by the terminal based on the target information corresponding to each first scheduling cell satisfies at least one of the following:
the terminal performs PDCCH monitoring in each first scheduling cell according to a target object limitation corresponding to the first scheduling cell; and
dividing the N1 first scheduling cells into groups according to the target information to make each group conform to a total target object limitation, and performing PDCCH monitoring based on the total target object limitation; where
the target object includes at least one of blind decoding and a control channel element.

Optionally, for each serving cell scheduled by the first scheduling cell, the target object limitation corresponding to the first scheduling cell includes at least one of the following:
in a case that the first scheduling cell is not configured with a resource set pool index or the first scheduling cell includes only one control resource set pool index value, the terminal does not expect that the number of PDCCH candidates or blind decodings monitored on a target slot group exceeds a first preset value;
in a case that the first scheduling cell is not configured with a resource set pool index or the first scheduling cell includes only one control resource set pool index value, the terminal does not expect that the number of non-overlapping control channel elements monitored on the target slot group exceeds a second preset value;
in a case that the first scheduling cell includes at least two control resource set pool index values, the terminal does not expect that the number of PDCCH candidates or blind decodings corresponding to a same control resource set pool index and monitored on the target slot group exceeds the first preset value;
in a case that the first scheduling cell includes at least two control resource set pool index values, the terminal does not expect that the number of non-overlapping control channel elements corresponding to a same control resource set pool index and monitored on the target slot group exceeds the second preset value;
in a case that the first scheduling cell includes at least two control resource set pool index values, the terminal does not expect that the number of PDCCH candidates or blind decodings monitored on the target slot group exceeds the first preset value by R times, where R is a positive integer; and
in a case that the first scheduling cell includes at least two control resource set pool index values, the terminal does not expect that the number of non-overlapping control channel elements monitored on the target slot group exceeds the second preset value by R times, and a control resource set pool index configured for the first scheduling cell includes at least two index values; where
the target slot group is any one slot group including Xs0 slots on an active BWP of the first scheduling cell, and Xs0 is a first value included in the target value.

Optionally, the total target object limitation includes at least one of the following:
the terminal does not expect that the number of PDCCH candidates or blind decodings monitored on a first slot group exceeds a third preset value;
the terminal does not expect that the number of non-overlapping control channel elements monitored on the first slot group exceeds a fourth preset value;
the terminal does not expect that the number of PDCCH candidates or blind decodings monitored on a first slot group exceeds a fifth preset value; and
the terminal does not expect that the number of non-overlapping control channel elements monitored on the first slot group exceeds a sixth preset value; where
the first slot group is a slot group including Xs0 slots on active BWPs of all the first scheduling cells in any one group; Xs0 is a first value included in the target value; the third preset value and the fourth preset value are determined based on the number of serving cells scheduled by the first scheduling cells in the group and the number of serving cells scheduled by the N1 first scheduling cells; and the fifth preset value and the sixth preset value are determined based on the number of first serving cells, the number of second serving cells, the number of third serving cells, and the number of fourth serving cells, where the first serving cell is a serving cell scheduled by a first-type first scheduling cell in the group, the second serving cell is a serving cell scheduled by a second-type first scheduling cell in the group, the third serving cell is a serving cell scheduled by a first-type first scheduling cell in the N1 first scheduling cells, and the fourth serving cell is a serving cell scheduled by a second-type first scheduling cell in the N1 first scheduling cells.

Optionally, the first-type first scheduling cell is a scheduling cell that is not configured with a control resource set pool index or that only includes one control resource set pool index value; and
the second-type first scheduling cell is a scheduling cell including at least two control resource set pool index values.

Optionally, at least one of the third preset value and the fourth preset value is B₁, and B₁ satisfies:
B₁=floor(Wₘₐₓ*T1/M), where Wₘₐₓ represents the maximum number of PDCCH candidates, blind decodings, or control channel elements monitored by the terminal, T1 represents the number of serving cells scheduled by the first scheduling cells in the group, and M represents the number of serving cells scheduled by the N1 first scheduling cells.

Optionally, at least one of the fifth preset value and the sixth preset value is B₂, and B₂ satisfies:
B₂=floor(Wₘₐₓ*(a1*T2+a2*T3)/(a1*M1+a2*M2)), where Wₘₐₓ Indicates the maximum number of PDCCH candidates or blind decodings monitored by the terminal, T2 indicates the number of first serving cells, T3 indicates the number of second serving cells, M1 indicates the number of third serving cells, and M2 indicates the number of fourth serving cells, and a1 and a2 are constants.

Optionally, the target information further includes a subcarrier spacing.

Optionally, the radio frequency unit 501 is specifically configured to: for each first scheduling cell, assume that the first scheduling cell is a virtual serving cell with a preset subcarrier spacing and a single-slot-based PDCCH monitoring capability; and perform PDCCH monitoring after preset grouping processing is performed on the virtual serving cell and a second scheduling cell other than the first scheduling cell in the serving cells configured for the terminal.

Optionally, the preset subcarrier spacing satisfies at least one of the following:
the preset subcarrier spacing is a subcarrier spacing specified by a protocol or configured by a network-side device; and
the preset subcarrier spacing is a quotient of an actual subcarrier spacing of the first scheduling cell and a first value included in the target value.

Optionally, at least one of a slot boundary, a subframe boundary, and a frame boundary of the virtual serving cell is associated with at least one of the following: a slot boundary of a corresponding first scheduling cell, a subframe boundary of the corresponding first scheduling cell, a frame boundary of the corresponding first scheduling cell, a configured time-domain offset of the corresponding first scheduling cell, and a time-domain offset of the corresponding first scheduling cell relative to a non-virtual scheduling cell with a preset subcarrier spacing.

Optionally, one slot of the virtual serving cell includes at least one slot group determined for a corresponding first scheduling cell.

Optionally, a time-domain offset between the virtual serving cell and a primary serving cell is associated with at least one of the following:
a time-domain offset configured for the corresponding first scheduling cell relative to the primary serving cell;
a subcarrier spacing of the corresponding first scheduling cell; and
a subcarrier spacing of the virtual serving cell.

Optionally, the preset grouping processing includes:
classifying the virtual scheduling cells and the second scheduling cells along according to a PDCCH monitoring capability type to obtain P1 scheduling cells and Q1 scheduling cells, where the P1 scheduling cells are cells based on a first PDCCH monitoring capability type, the Q1 scheduling cells are cells based on a second PDCCH monitoring capability type, and P1 and Q1 are positive integers; and
separately dividing the P1 scheduling cells and the Q1 scheduling cells into groups based on a subcarrier spacing.

Optionally, the serving cells configured for the terminal meet at least one of the following conditions:
frame or subframe boundaries of all the serving cells configured for the terminal are aligned;
frame or subframe boundaries of all scheduling cells in the serving cells configured for the terminal are aligned; and
frame or subframe boundaries of the N1 first scheduling cells are aligned.

An embodiment of this application further provides a readable storage medium, where a program or instructions are stored in the readable storage medium. When the program or the instructions are executed by a processor, the processes of the foregoing embodiments of the PDCCH monitoring method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiments of the PDCCH monitoring method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the PDCCH monitoring method, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A physical downlink control channel PDCCH monitoring method, comprising:
determining, by a terminal, N1 first scheduling cells, wherein the N1 first scheduling cells are scheduling cells with a slot-group based PDCCH monitoring capability in serving cells configured for the terminal;
determining, by the terminal, a target value corresponding to each first scheduling cell based on at least one combination value supported by the terminal and a search space corresponding to the N1 first scheduling cells; and
performing, by the terminal, PDCCH monitoring based on target information corresponding to each first scheduling cell; wherein
N1 is a positive integer, the target information comprises the target value, and the combination value comprises a first value and a second value, wherein the first value represents the number of slots comprised in a non-overlapping and consecutive slot group, the second value represents the number of slots configured for monitoring in the slot group for a preset search space, and the target value is one combination value or a first value comprised in one combination value.

2. The method according to claim 1, wherein before the determining, by a terminal, N1 first scheduling cells, the method further comprises:
determining, by the terminal according to target indication information sent by a network-side device, a PDCCH monitoring capability type of each scheduling cell in the serving cells configured for the terminal; wherein
the PDCCH monitoring capability type is used for determining the N1 first scheduling cells.

3. The method according to claim 2, wherein the target indication information is used to indicate at least one of the following:
a PDCCH monitoring capability of each serving cell configured for the terminal;
a subcarrier spacing of each serving cell configured for the terminal;
a PDCCH monitoring capability for an active bandwidth part BWP of each serving cell configured for the terminal; and
a subcarrier spacing for an active BWP of each serving cell configured for the terminal.

4. The method according to claim 1, wherein the target value corresponding to the first scheduling cell satisfies at least one of the following:
a first value comprised in the target value is a largest or smallest first value comprised in the at least one combination value;
in a case that all first values in the at least one combination value are the same, the first value comprised in the target value is a first value comprised in any one combination value;
in a case that the number of the combination values is 1, the target value is the combination value; and
in a case that the number of the combination values is greater than 1, the target value is selected from a target set according to a preset rule; wherein
the target set comprises combination values corresponding to a case that a search space configured for the serving cell or an active BWP of the serving cell meets a first preset condition.

5. The method according to claim 4, wherein the first preset condition comprises at least one of the following:
monitoring slots for a first search space group are preset consecutive Ys slots in a slot group comprising Xs slots, and the Ys slots are spaced apart by Xs*K slots, wherein K is a positive integer; and
a span between a first slot and a second slot for the first search space group in all slot groups comprising Xs slots is less than or equal to Ys slots; wherein
the first slot is the 1st slot configured with monitoring occasion, and the second slot is the last slot configured with monitoring occasion; Xs represents a first value of the combination value, Ys represents a second value of the combination value, and the first search space group is at least one preset-type search space configured for the serving cell or the active BWP of the serving cell.

6. The method according to claim 4, wherein the preset rule comprises at least one of the following:
selecting a largest first value comprised in the target set as the first value of the target value;
selecting a largest first value associated with a target object in the target set as the first value of the target value, wherein the target object comprises at least one of blind decoding and control channel element;
determining L1 combination values corresponding to the largest first value in the target set, and selecting a combination value with a smallest second value from the L1 combination values as the target value; and
determining L2 combination values corresponding to the largest first value associated with the target object in the target set, and selecting a combination value with a smallest second value from the L2 combination values as the target value.

7. The method according to claim 1, wherein a monitoring rule for performing PDCCH monitoring by the terminal based on the target information corresponding to each first scheduling cell satisfies at least one of the following:
the terminal performs PDCCH monitoring in each first scheduling cell according to a target object limitation corresponding to the first scheduling cell; and
dividing the N1 first scheduling cells into groups according to the target information to make each group conform to a total target object limitation, and performing PDCCH monitoring based on the total target object limitation; wherein
the target object comprises at least one of blind decoding and a control channel element.

8. The method according to claim 7, wherein for each serving cell scheduled by the first scheduling cell, the target object limitation corresponding to the first scheduling cell comprises at least one of the following:
in a case that the first scheduling cell is not configured with a resource set pool index or the first scheduling cell comprises only one control resource set pool index value, the terminal does not expect that the number of PDCCH candidates or blind decodings monitored on a target slot group exceeds a first preset value;
in a case that the first scheduling cell is not configured with a resource set pool index or the first scheduling cell comprises only one control resource set pool index value, the terminal does not expect that the number of non-overlapping control channel elements monitored on the target slot group exceeds a second preset value;
in a case that the first scheduling cell comprises at least two control resource set pool index values, the terminal does not expect that the number of PDCCH candidates or blind decodings corresponding to a same control resource set pool index and monitored on the target slot group exceeds the first preset value;
in a case that the first scheduling cell comprises at least two control resource set pool index values, the terminal does not expect that the number of non-overlapping control channel elements corresponding to a same control resource set pool index and monitored on the target slot group exceeds the second preset value;
in a case that the first scheduling cell comprises at least two control resource set pool index values, the terminal does not expect that the number of PDCCH candidates or blind decodings monitored on the target slot group exceeds the first preset value by R times, wherein R is a positive integer; and
in a case that the first scheduling cell comprises at least two control resource set pool index values, the terminal does not expect that the number of non-overlapping control channel elements monitored on the target slot group exceeds the second preset value by R times, and a control resource set pool index configured for the first scheduling cell comprises at least two index values; wherein
the target slot group is any one slot group comprising Xs0 slots on an active BWP of the first scheduling cell, and Xs0 is a first value comprised in the target value.

9. The method according to claim 7, wherein the total target object limitation comprises at least one of the following:
the terminal does not expect that the number of PDCCH candidates or blind decodings monitored on a first slot group exceeds a third preset value;
the terminal does not expect that the number of non-overlapping control channel elements monitored on the first slot group exceeds a fourth preset value;
the terminal does not expect that the number of PDCCH candidates or blind decodings monitored on a first slot group exceeds a fifth preset value; and
the terminal does not expect that the number of non-overlapping control channel elements monitored on the first slot group exceeds a sixth preset value; wherein
the first slot group is a slot group comprising Xs0 slots on active BWPs of all first scheduling cells in any one group; Xs0 is a first value comprised in the target value; the third preset value and the fourth preset value are determined based on the number of serving cells scheduled by the first scheduling cells in the group and the number of serving cells scheduled by the N1 first scheduling cells; and the fifth preset value and the sixth preset value are determined based on the number of first serving cells, the number of second serving cells, the number of third serving cells, and the number of fourth serving cells, wherein the first serving cell is a serving cell scheduled by a first-type first scheduling cell in the group, the second serving cell is a serving cell scheduled by a second-type first scheduling cell in the group, the third serving cell is a serving cell scheduled by a first-type first scheduling cell in the N1 first scheduling cells, and the fourth serving cell is a serving cell scheduled by a second-type first scheduling cell in the N1 first scheduling cells.

10. The method according to claim 9, wherein the first-type first scheduling cell is a scheduling cell that is not configured with a control resource set pool index or that only comprises one control resource set pool index value; and
the second-type first scheduling cell is a scheduling cell comprising at least two control resource set pool index values.

11. The method according to claim 9, wherein at least one of the third preset value and the fourth preset value is B₁, and B₁ satisfies:
B₁=floor(Wₘₐₓ*T1/M), wherein Wₘₐₓ represents the maximum number of PDCCH candidates, blind decodings, or control channel elements monitored by the terminal, T1 represents the number of serving cells scheduled by the first scheduling cells in the group, and M represents the number of serving cells scheduled by the N1 first scheduling cells.

12. The method according to claim 9, wherein at least one of the fifth preset value and the sixth preset value is B₂, and B₂ satisfies:
B₂=floor(Wₘₐₓ*(a1*T2+a2*T3)/(a1*M1+a2*M2)), wherein Wₘₐₓ indicates the maximum number of PDCCH candidates or blind decodings monitored by the terminal, T2 indicates the number of first serving cells, T3 indicates the number of second serving cells, M1 indicates the number of third serving cells, and M2 indicates the number of fourth serving cells, and a1 and a2 are constants.

13. The method according to claim 1, wherein the target information further comprises a subcarrier spacing.

14. The method according to claim 13, wherein the performing, by the terminal, PDCCH monitoring based on target information corresponding to each first scheduling cell comprises:
for each first scheduling cell, assuming, by the terminal, that the first scheduling cell is a virtual serving cell with a preset subcarrier spacing and a single-slot-based PDCCH monitoring capability; and
performing, by the terminal, PDCCH monitoring after performing preset grouping processing on the virtual serving cell and a second scheduling cell other than the first scheduling cell in the serving cells configured for the terminal.

15. The method according to claim 14, wherein the preset subcarrier spacing satisfies at least one of the following:
the preset subcarrier spacing is a subcarrier spacing specified by a protocol or configured by a network-side device; and
the preset subcarrier spacing is a quotient of an actual subcarrier spacing of the first scheduling cell and a first value comprised in the target value.

16. The method according to claim 14, wherein at least one of a slot boundary, a subframe boundary, and a frame boundary of the virtual serving cell is associated with at least one of the following: a slot boundary of a corresponding first scheduling cell, a subframe boundary of the corresponding first scheduling cell, a frame boundary of the corresponding first scheduling cell, a configured time-domain offset of the corresponding first scheduling cell, and a time-domain offset of the corresponding first scheduling cell relative to a non-virtual scheduling cell with a preset subcarrier spacing.

17. The method according to claim 14, wherein one slot of the virtual serving cell comprises at least one slot group determined for a corresponding first scheduling cell.

18. The method according to claim 14, wherein a time-domain offset between the virtual serving cell and a primary serving cell is associated with at least one of the following:
a time-domain offset configured for the corresponding first scheduling cell relative to the primary serving cell;
a subcarrier spacing of the corresponding first scheduling cell; and
a subcarrier spacing of the virtual serving cell.

19. The method according to claim 14, wherein the preset grouping processing comprises:
classifying the virtual scheduling cells and the second scheduling cells along according to a PDCCH monitoring capability type to obtain P1 scheduling cells and Q1 scheduling cells, wherein the P1 scheduling cells are cells based on a first PDCCH monitoring capability type, the Q1 scheduling cells are cells based on a second PDCCH monitoring capability type, and P1 and Q1 are positive integers; and
separately dividing the P1 scheduling cells and the Q1 scheduling cells into groups based on a subcarrier spacing.

20. The method according to claim 1, wherein the serving cells configured for the terminal meet at least one of the following conditions:
frame or subframe boundaries of all the serving cells configured for the terminal are aligned;
frame or subframe boundaries of all scheduling cells in the serving cells configured for the terminal are aligned; and
frame or subframe boundaries of the N1 first scheduling cells are aligned.

21. A physical downlink control channel PDCCH monitoring apparatus, comprising:
a first determining module, configured to determine N1 first scheduling cells, wherein the N1 first scheduling cells are scheduling cells with a slot-group based PDCCH monitoring capability in serving cells configured for a terminal;
a second determining module, configured to determine a target value corresponding to each first scheduling cell based on at least one combination value supported by the terminal and a search space corresponding to the N1 first scheduling cells; and
a monitoring module, configured to perform PDCCH monitoring based on target information corresponding to each first scheduling cell; wherein
N1 is a positive integer, the target information comprises the target value, and the combination value comprises a first value and a second value, wherein the first value represents the number of slots comprised in a non-overlapping and consecutive slot group, the second value represents the number of slots configured for monitoring in the slot group for a preset search space, and the target value is one combination value or a first value comprised in one combination value.

22. The apparatus according to claim 21, wherein the PDCCH monitoring apparatus further comprises:
a third determining module, configured to determine, according to target indication information sent by a network-side device, a PDCCH monitoring capability type of each scheduling cell in the serving cells configured for the terminal; wherein
the PDCCH monitoring capability type is used for determining the N1 first scheduling cells.

23. The apparatus according to claim 21, wherein the target value corresponding to the first scheduling cell satisfies at least one of the following:
a first value comprised in the target value is a largest or smallest first value comprised in the at least one combination value;
in a case that all first values in the at least one combination value are the same, the first value comprised in the target value is a first value comprised in any one combination value;
in a case that the number of the combination values is 1, the target value is the combination value; and
in a case that the number of the combination values is greater than 1, the target value is selected from a target set according to a preset rule; wherein
the target set comprises combination values corresponding to a case that a search space configured for the serving cell or an active BWP of the serving cell meets a first preset condition.

24. A terminal, comprising a processor, a memory, and a program or instructions stored in the memory and capable of running on the processor, wherein when the program or the instructions are executed by the processor, the steps of the physical downlink control channel PDCCH monitoring method according to any one of claims 1 to 20 are implemented.

25. A readable storage medium, wherein the readable storage medium stores a program or an instruction, and when the program or the instruction is executed by a processor, the steps of the physical downlink control channel PDCCH monitoring method according to any one of claims 1 to 20 are implemented.
